# EUROPEAN PATENT APPLICATION

(11) **EP 3 038 061 A1**
(43) Date of publication of application: **29.06.2016**
(21) Application number: 14307160.3
(22) Date of filing: 23.12.2014
(51) Int. Cl.: G06T 19/00, G06F 3/147, H04N 13/04

(54) **Apparatus and method to display augmented reality data**

(71) Applicant: Orange, 75015 Paris (FR)
(72) Inventor: Kizawa, Kazuki, Tokyo, Tokyo 160-0022 (JP); Terasaki, Shinya, Tokyo, Tokyo 160-0022 (JP)
(74) Representative: Orian, Yvette Suzanne

(57) **Abstract**

A display apparatus and method to display augmented reality data associated with a target object in an environment being viewed by a user, for example through a transparent screen, determine the distance to the target object and display the augmentation data three-dimensionally at a depth, in the user's field of view, that is correlated with the distance between the user's eyes and the target object.

## Description

The present invention relates to an apparatus and method to display augmented reality (AR) data. More particularly, the invention relates to a display apparatus and method which display visual reality-augmentation data in the sight of a user while the user views his environment.

The expression "augmented reality" (AR) is used to designate a view that is presented to a user and which, in contrast to "virtual reality", represents a physical, real-world environment supplemented by additional sensory data. The additional sensory data typically includes additional visual data (graphics, text and, sometimes, video) but it may also include other sensory data such as sound.

Usually an AR apparatus provides the user with augmentation of a "live" view of a real-world environment. Some AR display devices (e.g. Google Glass^{®}) augment the user's view of the environment with a visual display of text messages and the like received by the user's smartphone. However, AR display devices often add to the view of the real-world environment augmentation data that has a semantic link to the elements of that environment. Thus, for example, in an AR application designed for leisure and tourism the augmentation may include display of textual data that is superimposed on the environment viewed by the user and provides information relating to elements in the viewed environment, such as names and brief descriptions of restaurants or other items of potential interest that are in the viewed environment.

For the purposes of clarity, the expression "an annotation" will be used below to designate an item of information that is superposed, as augmentation data, on a user's view of an environment, and which is associated with an item in the viewed environment. The expression "object" will be used to designate a target item in the environment, even if the item in question is a living thing.

Depending on the AR technology being used, the view visible to the user may consist of a direct view of the real-world environment overlaid with visual augmentation data generated by the AR display apparatus. This may be the case, for example, when the AR device is of "smart glasses" type. In other cases, e.g. where the view is presented to the user on a smartphone or tablet device, the user may see an indirect view that corresponds to a reproduced image of the real-world environment that the AR apparatus has captured using a camera, with additional superimposed visual data constituting the "augmentation".

As indicated above, certain AR systems display augmentation data superimposed on a direct view that the user has of his environment. AR systems of this type may be designated "direct-viewing AR systems". Direct-viewing AR devices may make use of a transparent screen and superimpose additional visual data on the environment that the user can view, directly, through the transparent screen. In the case of so-called "smart glasses", in general two transparent screens are provided mounted in a frame to form eyeglasses that the user can wear. The expression "transparent screen" will be used below irrespective of whether, in reality, the AR apparatus in question actually makes use of a pair of transparent screens (or more than two screens).

In AR display apparatus various technologies may be used for displaying visual augmentation data to the user. For example, many smart glasses use curved mirrors or waveguide technology to present information in the user's line of vision, and there are also virtual retinal display devices and smart contact lenses. The invention is not particularly limited having regard to the nature of the technology (curved mirrors, waveguide, etc.) used for displaying the visual augmentation data.

Conventionally, an AR display apparatus that superimposes information on the environment that a user views directly, generates and displays two-dimensional image data representing the added information. Dependent on the display technology that is employed in the AR display apparatus, the added information may appear to the user to be located on a transparent display screen that forms part of the AR apparatus, or on a virtual display screen (e.g. one positioned further away from the user than a transparent display screen that forms part of the AR device).

A disadvantage of the conventional AR display apparatus described in the preceding paragraph is that the user perceives all the annotations at the same depth in his visual field (that is, they all appear to be the same distance away from the user). This can create ambiguity regarding which element in the environment is the target of the information contained in the annotation. In addition it may be difficult or impossible to read annotations that relate to elements that are lined up in the same direction relative to the user. An additional problem consists in the fact that the distance between the user's eyes and each annotation is different from the distance between the user's eyes and the environmental element that is the target of the annotation, which means that the user may not be able simultaneously to bring into focus the annotation and the target of the annotation. The user may experience discomfort and/or eye strain if he tries to read the annotation and, immediately beforehand or afterwards, look at the element which is the target of the annotation, because this involves a rapid change in focal distance for his eyes.

The present invention has been made in view of the above-mentioned disadvantages.

Certain embodiments of the invention provide a display apparatus configured to display visual reality-augmentation data in a user's field of view, in superposition with a direct user view of an environment, the display apparatus comprising:
an imaging unit configured to generate image data representing the environment being viewed by the user,
a processor unit configured to identify a target object in the environment imaged by the imaging unit, and to generate reality-augmentation data associated with the identified target object,
a ranging unit configured to determine the distance to the target object in the environment, and
a display unit supporting three-dimensional display of visual data,
wherein the processor unit is configured to generate, for display by the display unit, three-dimensional (3D) image data to display the reality-augmentation data at a depth, in the user's visual field, correlated with the distance between the user's eyes and the target object in the environment.

The above-mentioned display apparatus leverages on human depth perception. Using 3D display technology the AR information may now appear in the user's visual field in the same plane as the target object itself, allowing the user to understand more easily which information corresponds to which object.

The above display apparatus is operative to produce 3D display of reality-augmentation data but that does not mean it must be an apparatus that can only perform reality augmentation. The display apparatus may be a mediated-reality device that also has the capability of diminishing reality in some respect (e.g. it may operate to reduce the perceived intensity of light sources in the environment within the user's field of view).

In certain embodiments of display apparatus according to the invention there is a semantic link between the information of the annotation and the associated target item, for example the annotation may be descriptive of the target item. For instance, the reality-augmentation data may comprise one, two or more than two textual descriptors.

The processor unit of the display apparatus may generate stereoscopic 3D image data comprising left-eye and right-eye image data to display the reality-augmentation data.

The above display apparatus may comprise a transparent screen through which the user views the environment. A right-eye image and a left-eye image that combine to produce a visual impression that displays one or more items of augmentation data in 3D at the desired depth(s) may be displayed on the transparent screen.

In the display apparatus, the ranging unit may comprise a time-of-flight camera configured to evaluate the distance between the target object and the time-of-flight camera. The distance between the target object and the user's eyes can be estimated based on this measurement and on knowledge of the relative positions of the time-of-flight camera and the expected position of the user's eyes.

Certain embodiments of the invention provide a method of displaying visual reality-augmentation data, in a user's field of view, in superposition with a direct user view of an environment, comprising:
determining the distance to a target object in the environment being viewed by the user,
three-dimensionally displaying reality-augmentation data descriptive of the target object, at a depth, in the user's field of vision, that is correlated to the distance from the user's eyes to the target object.

In the display method there may be a semantic link between the reality-augmentation data and the target object. For instance, the reality-augmentation data may comprise at least one textual descriptor.

The display method may include the step of generating stereoscopic 3D image data comprising left-eye and right-eye image data to display the reality-augmentation data.

In the display method, the step of determining the distance to the target object may comprise evaluating the distance to the target object using a time of flight camera.

The invention further provides a computer program comprising instructions to implement the above method when the program is executed by a processor, and a recording medium bearing such a computer program.

Further features and advantages of embodiments of the present invention will become apparent from the following description of said embodiments, which is given by way of illustration and not limitation, illustrated by the accompanying drawings, in which:
Fig.1 illustrates an example of a display apparatus according to an embodiment of the invention, in which:
   Fig.1A illustrates the arrangement of the display apparatus in a viewing space, and
   Fig.1B is a block diagram illustrating functional components of the display apparatus;
Fig.2 is a flow diagram illustrating steps in an example of a display method according to an embodiment of the invention;
Fig.3 is a diagram to aid understanding regarding transformation of augmentation data into 3D display data; and
Fig.4 is a diagram illustrating disparity between left-eye and right-eye display data.

Certain embodiments of the invention will now be described for the purposes of illustration, not limitation.

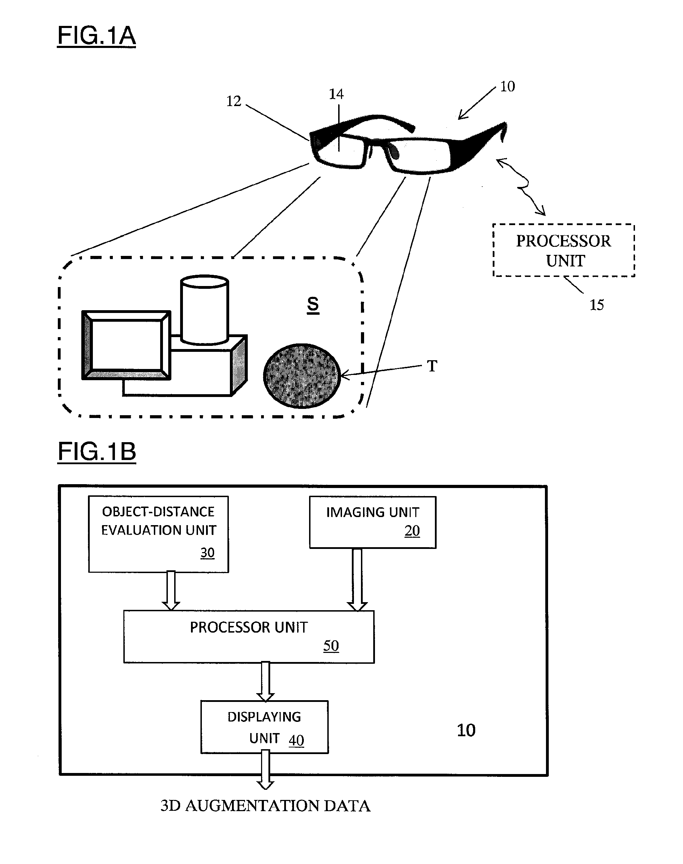

General features of an example of a display apparatus according to an embodiment of the invention will now be described with reference to Figs.1A and 1B.

In the example of Fig.1A, the display apparatus 10 includes various functional components disposed in a housing 12 in the shape of a set of eyeglasses, enabling the apparatus to be easily worn by a user. These functional components of the display apparatus 10 could be provided in a housing of a different shape, either a housing that makes the apparatus wearable, or a different kind of housing. Miniaturization of functional components has proceeded to such a degree that it may be possible to house all of the functional components of the display apparatus 10 in an eyeglass-style housing that is small and light enough to be worn on the user's head. However, depending on the application, it may be necessary or expedient for some of the functional components making up the display apparatus 10 to be provided outside the head-mounted housing (for example, in a module that can be carried in the user's pocket and which has a wired or wireless communicative connection to the components in the head-worn housing). Moreover, in order to provide greater processing power to the display apparatus 10 it may be necessary or expedient for the display apparatus 10 to be in communicative connection with an external processing unit 15, as illustrated in dashed lines in Fig.1A.

As illustrated schematically in Fig.1A, in this example a user wearing the housing 12 may view an environment or scene S containing a variety of objects, through a transparent display 14 provided in the housing 12.

In the example illustrated in Figs.1A and 1B the display apparatus 10 is configured to display visual augmented reality data that is descriptive of certain target objects in the scene S being viewed by the user. In this example the display apparatus 10 is driven by augmented reality application software which defines various classes of target object T and embodies image processing algorithms for identifying and tracking target objects as the user moves relative to his environment (see below). The augmented reality software application may be run by a processing unit of the display apparatus 10 (described below) or may be run by a device associated with the display apparatus 10 (for example the processing unit 15 illustrated in Fig.1A, a module in the user's smartphone, and so on).

The augmented reality software application also defines augmentation data which is to be displayed in relation to target objects in various circumstances. For example, the augmented reality software application may be associated with a database that stores descriptive data relating to specific individual target objects (or to target objects of a particular class) and may be designed to label all recognized target objects that are within the field of view of the user at a given time. The user's instantaneous field of view may be determined, for example, using a head tracking device (not shown) in conjunction with an imaging unit to be described below.

As illustrated in Fig.1B, in this example the display device 10 includes an imaging unit 20, such as a digital camera, which images the environment being viewed by the user so that the augmented reality software application can process the resultant image data (i.e. to locate, identify and track target objects). The display apparatus 10 also comprises an object-distance evaluation unit (or "ranging unit") 30, such as a time of flight camera, pointing in substantially the same direction as the imaging unit 20 so that the object-distance evaluation unit 30 may determine the distance to any desired target object within the user's current field of view. The time-of-flight camera measures the distance between itself and the target object. However, the distance between the target object and the user's eyes can be estimated based on this measurement and based on the architecture/dimensions of the display apparatus itself (given that the display apparatus is designed to be mounted on the user's head and so it is possible to estimate with reasonable precision what are the positions of the user's eyes relative to the position of the time-of flight camera).

The display device 10 according to this example also includes a processor unit 50 to process the image data generated by the imaging unit 20, distance data generated by the object-distance evaluation unit 30 and augmentation data (as described below). The display apparatus 10 also includes a display unit 40 supporting stereoscopic 3D display of visual data.

According to the present example embodiment, when a target object T in the environment being viewed by the user has been identified for which augmentation data exists, the processing unit 50 of the display apparatus 10 computes 3D display data to display the relevant augmentation data using the displaying unit 40. The processing unit 50 computes the 3D display data so that the AR data associated with a given target object T may be perceived by the user at a depth in the user's visual field that correlates to the distance from the user (based on human depth perception). This may be achieved by modifying the positions of pixels representing the AR information. The pixel positions may be modified independently for the right eye and left eye.

In the present example the AR data is textual data describing the target object T. This textual data may be perceived by the user in substantially the same plane as the target object T it describes.

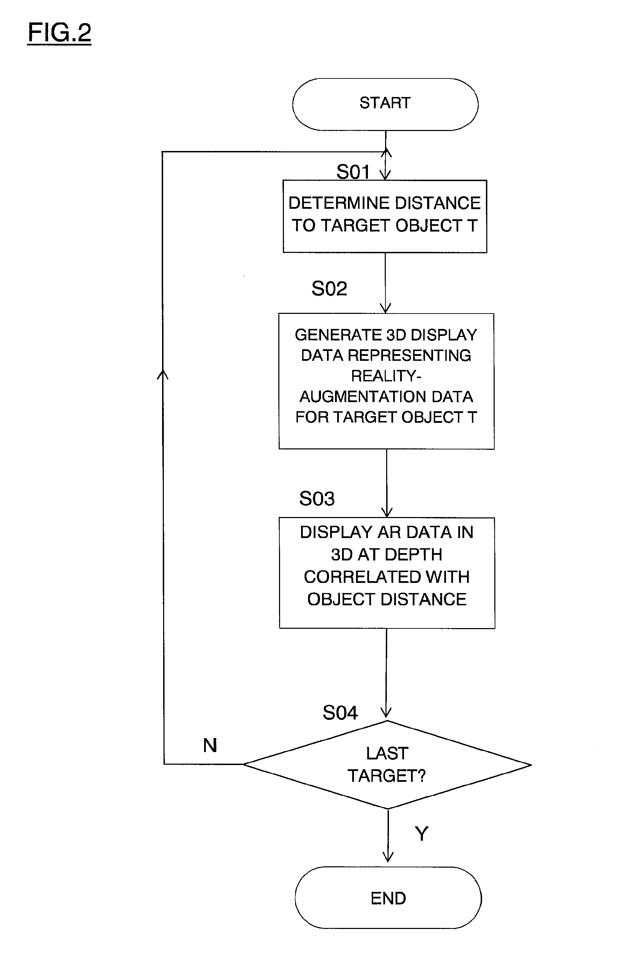

General features of an embodiment of a display method according to an embodiment of the invention will now be described with reference to the flow diagram of Fig.2.

In the display method according to the example of Fig.2, the process is invoked when there is augmented reality data to be displayed in relation to a target object T that has been identified in the environment being viewed by the user. In a first step S01 the distance to the target object T is evaluated by the object-distance evaluation unit 30. Next the reality-augmentation data is processed (step S02) to generate three-dimensional display data configured such that the augmentation data appears, in the user's visual field, at a depth that is correlated with the distance between the user and the target object.

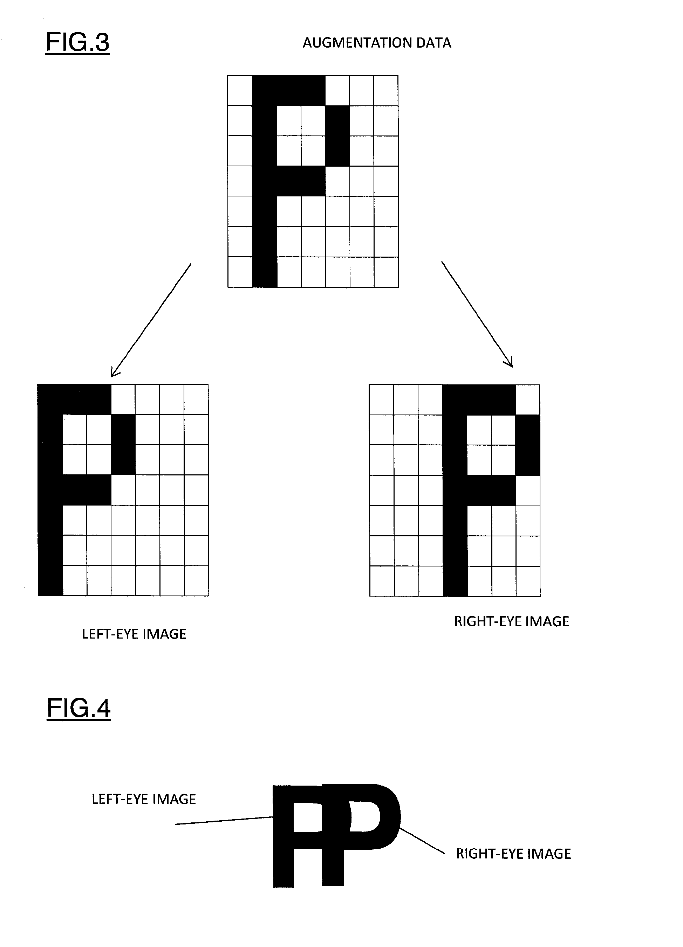

The processing of the augmentation data may involve transforming unitary augmentation data (such as the data illustrated in the top portion of Fig.3) into display data comprising a pair of left-eye and right-eye images as illustrated in the bottom portion of Fig.3. In the left-eye and right-eye image there is a disparity between the positions of those pixels that represent the same position in the reality-augmentation data. Thus, for example, in the case illustrated in Fig.3, the pixel at the top left-hand corner of the illustrated letter P is relatively further to the left in the left-hand image than it was in the original augmentation data and it is relatively further over to the right in the right-eye image. This disparity can be seen more clearly in Fig.4 which illustrates how the left-eye and right-eye image data overlaps in this example. The disparity between the display data of the left-eye image and right-eye image depends on the depth at which it is desired to position the augmentation data.

The process of generating a pair of left-eye and right-eye images from unitary augmentation data may involve shifting pixels from their initial positions in the unitary data to new positions only in the left-eye image (generating the right-eye image without shifting the pixel positions compared to the unitary data), or shifting the pixels from their initial positions only in the right-eye image, or by making a relatively smaller shift in both the left-eye and right-eye images. Whichever variant is used results in the left-eye and right-eye images having an amount of disparity that causes the augmentation data to appear as if it is at the desired depth in the visual field.

In step S03 of the display method illustrated in Fig.2 the 3D version of the augmentation data is displayed by the displaying unit 40 and is perceived by the user at a depth, in the user's field of vision, that is correlated to the distance from the user's eyes to the target object T. It is then checked (step S04) if there are any other target objects in the environment being viewed by the user, for which augmentation data is to be displayed. If there is another relevant target object then the flow returns to step S01. Otherwise the method terminates until a fresh target object is identified for which augmentation data is to be displayed, or until it is detected that there has been a change in the position of the user's eyes relative to the environment (e.g. a change that may affect the distance from the user to target objects that are labelled by augmentation data).

Although the present invention has been described above with reference to certain specific embodiments, it will be understood that the invention is not limited by the particularities of the specific embodiments. Numerous variations, modifications and developments may be made in the specified embodiments within the scope of the appended claims.

For instance, in the example of display apparatus described above the distance between a user and a target object is estimated based on a measurement made using a time-of-flight camera. However, the invention is not limited to the use of a time-of-flight camera; other devices may be used for measuring the distance to a target object: for example, the display apparatus may include two cameras that, during use of the apparatus, are positioned at the left and right sides of the user's head and the principle of parallax may be used to determine the distance to a target object.

Furthermore, in the example display method described above the distance to a target object is evaluated when it has already been determined that augmentation data exists associated with the target object. In practice, in various embodiments of the invention there may be ongoing processing of image data representing the environment within the user's expected field of view, and/or ongoing determination of the distance to potential target objects, without waiting for a determination beforehand that augmentation data is available associated with that potential target object.

## Claims

1. A display apparatus configured to display visual reality-augmentation data in a user's field of view, in superposition with a direct user view of an environment, the display apparatus comprising:
an imaging unit configured to generate image data representing the environment being viewed by the user,
a processor unit configured to identify a target object in the environment imaged by the imaging unit, and to generate reality-augmentation data associated with the identified target object,
a ranging unit configured to determine the distance to the target object in the environment, and
a display unit supporting three-dimensional display of visual data,
wherein the processor unit is configured to generate, for display by the display unit, three-dimensional (3D) image data to display the reality-augmentation data at a depth, in the user's visual field, correlated with the distance between the user's eyes and the target object.

2. The display apparatus according to claim 1, wherein the reality-augmentation data comprises at least one textual descriptor.

3. The display apparatus according to claim 1 or 2, wherein the processor unit is configured to generate stereoscopic 3D image data comprising left-eye and right-eye image data to display said reality-augmentation data.

4. The display apparatus according to claim 1, wherein the ranging unit comprises a time-of-flight camera configured to evaluate the distance to the target object.

5. The display apparatus according to any previous claim, and comprising a transparent screen disposed to be in the user's field of view during use of the display apparatus.

6. A method of displaying visual reality-augmentation data, in a user's field of view, in superposition with a direct user view of an environment, comprising:
determining the distance to a target object in the environment being viewed by the user,
three-dimensionally displaying reality-augmentation data associated with the target object, at a depth, in the user's field of vision, that is correlated to the distance from the user's eyes to the target object.

7. The display method according to claim 6, wherein the reality-augmentation data comprises at least one textual descriptor.

8. The display method according to claim 6 or 7, and comprising the step of generating stereoscopic 3D image data comprising left-eye and right-eye image data to display the reality-augmentation data.

9. The display method according to claim 6, wherein the step of determining the distance to the target object comprises evaluating the distance to the target object using a time of flight camera.

10. The display method according to any of claims 6 to 9, wherein the visual reality-augmentation data is displayed in superposition with a direct user view of an environment seen through a transparent screen.

11. A computer program comprising instructions to implement the method of any one of claims 6 to 10 when the program is executed by a processor.

12. A recording medium bearing a computer program according to claim 11.
